(19)

Europäisches
Patentamt
European
Patent Office
Office européen
des brevets

(11) **EP 4 753 036 A1**

(12) **EUROPEAN PATENT APPLICATION**
published in accordance with Art. 153(4) EPC

(43) Date of publication:
**03.06.2026 Bulletin 2026/23**

(21) Application number: **23946796.2**

(22) Date of filing: **17.10.2023**

(51) International Patent Classification (IPC):
**H01M 50/184** (2021.01)    **H01M 10/04** (2006.01)
**H01M 50/105** (2021.01)    **H01M 50/247** (2021.01)

(52) Cooperative Patent Classification (CPC):
**H01M 10/04; H01M 50/105; H01M 50/184;**
**H01M 50/247;** Y02E 60/10; Y02P 70/50

(86) International application number:
**PCT/KR2023/016002**

(87) International publication number:
**WO 2025/023371 (30.01.2025 Gazette 2025/05)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **24.07.2023  KR 20230096350**

(71) Applicant: **Libest Inc.**
**Daejeon 34002 (KR)**

(72) Inventors:
 • **KIM, Joo Seong**
  **Daejeon 34002 (KR)**

 • **LIM, Seung Gyu**
  **Daejeon 34002 (KR)**
 • **KIM, Seon Kyong**
  **Daejeon 34002 (KR)**
 • **JANG, Ji Hoon**
  **Daejeon 34002 (KR)**
 • **LEE, Gil Ju**
  **Daejeon 34002 (KR)**
 • **CHAE, Soo Jin**
  **Daejeon 34002 (KR)**
 • **KIM, Mi Hee**
  **Daejeon 34002 (KR)**

(74) Representative: **Brann AB**
**P.O. Box 3690**
**Sveavägen 63**
**103 59 Stockholm (SE)**

(54) **BATTERY AND METHOD FOR MANUFACTURING BATTERY**

(57)    A battery includes an electrode assembly including a plurality of electrodes, an exterior material including an accommodating part which accommodates the electrode assembly and a sealing part which seals the electrode assembly along the accommodating part, and a reinforcing structure which is formed on an outer surface of the sealing part.

*FIG. 1A*

*FIG. 1B*

*FIG. 1C*

## Description

## TECHNICAL FIELD

The present disclosure relates to a battery which is chargeable and dischargeable and can be provided as a power source for a mobile or flexible device.

## BACKGROUND

A battery, i.e., an electrochemical cell, refers to an assembly that is composed of at least two electrodes and an electrolyte to provide electrical energy, and in particular, chargeable and dischargeable secondary batteries are being widely used in various advanced electronic devices including smart phones.

Recently, various attempts have been made to deviate from conventional shapes in the design of mobile devices, including smartphones, and various wearable devices. Also, attention is increasing on flexible devices which can be bent while maintaining their functions. Accordingly, it is important to ensure the reliability and safety of a flexible battery which can be built in such a flexible device and used as a power source.

In this regard, Patent Document 1, which is a prior art, discloses a technique of forming a pattern on an exterior material. Patent Document 1 discloses a configuration in which at least one pattern part is formed on the exterior material in a transverse direction (TD) of the exterior material. However, when a battery is repeatedly bent with a high curvature, such a pattern causes changes in the gap between electrode layers stacked within the exterior material. If the gap between the electrode layers becomes significantly larger than the initial state, the reliability and safety of the battery are degraded.

A brief explanation will be provided below regarding an increase in gap between electrode layers in a conventional battery.

Inside an exterior material of the conventional battery, electrodes including a positive electrode and a negative electrode are arranged in a straight line and are stacked in close contact with each other while maintaining a constant distance. Thus, it can be seen that the gap between the electrode layers is uniform. In this case, an insulating material is placed between the electrodes to suppress short circuit, which may occur if the positive electrode and the negative electrode come into direct contact, and to allow lithium ions to move.

However, in the conventional battery subjected to repeated bending, the outermost electrode may slide inwards due to curvature when the battery is bent. When the battery is straightened again, the outermost electrode may not return to its original position, resulting in deformation. This deformation may cause the electrode layers, which initially have a uniform gap therebetween, to be partially lifted, resulting in irregular gaps.

Specifically, if the battery is deformed from a flat state (first state) to a bent state (second state) and then returns to a flat state (third state), an electrode that has been severely deformed into a curved shape or an irregular waveform shape (for example, the outermost electrode) may have difficulty returning to its original flat state. Particularly, in a structure where one side of the electrode is fixed and the other side is not, the outermost electrode is more susceptible to deformation compared to the other electrodes. Therefore, as the battery returns to its original state, the electrodes may be lifted or bent toward the pouch, resulting in irregular gaps.

Further, when deformation is repeatedly applied to the battery beyond the designed range of the radius of curvature, the battery may be deformed with a non-uniform curvature, i.e., an unnatural curvature, such that specific portions of the battery are bent or folded, which may cause electrolyte leakage.

## DISCLOSURE OF THE INVENTION

## PROBLEMS TO BE SOLVED BY THE INVENTION

The present disclosure is conceived to provide a battery including: an electrode assembly including a plurality of electrodes; and an exterior material including an accommodating part which accommodates the electrode assembly and a sealing part which seals the electrode assembly along the accommodating part.

Also, the present disclosure is conceived to provide a flexible battery in which a reinforcing structure is included on an outer surface of an exterior material, thereby suppressing the occurrence of a large gap caused by interlayer separation between electrodes inside the exterior material when the battery is bent, and enabling the battery to be deformed with a uniform curvature within a designed radius of curvature range even when an external force that causes deformation of the battery beyond the designed radius of curvature is applied.

The problems to be solved by the present disclosure are not limited to the above-described problems. There may be other problems to be solved by the present disclosure.

## MEANS FOR SOLVING THE PROBLEMS

To solve the above-described problem, an embodiment of the present disclosure provides a battery including: an electrode assembly including a plurality of electrodes; and an exterior material including an accommodating part which accommodates the electrode assembly and a sealing part which seals the electrode assembly along the accommodating part, and a reinforcing structure is included on an outer surface of the exterior material.

According to an embodiment, the reinforcing structure may be formed on at least one surface of the sealing part in order to maintain shapes of the sealing part of the exterior material and an adjacent area, which is a partial region of an accommodating part positioned in contact with the sealing part.

According to an embodiment, a thickness of the reinforcing structure formed on the at least one surface of the sealing part may be designed based on a thickness of the battery and a thickness of the sealing part.

According to an embodiment, a first reinforcing structure may be formed on a first sealing part located at one end of the exterior material, and a second reinforcing structure may be formed on a second sealing part located at the other end of the exterior material.

According to an embodiment, a combined width of the first reinforcing structure and the second reinforcing structure may be designed based on a width of the battery and a width of the electrode assembly.

According to an embodiment, a central area of the reinforcing structure and peripheral areas located at both ends of the reinforcing structure may be formed to have the same thickness.

According to an embodiment, the reinforcing structure may extend from the sealing part to cover an edge area of the exterior material, and the edge area may be positioned in a direction parallel to a long axis direction of the battery.

According to an embodiment, the central area of the reinforcing structure and the peripheral areas located at the both ends of the reinforcing structure may be formed to have different thicknesses.

Another embodiment of the present disclosure provides a method for manufacturing a battery including: a process of inserting an electrode assembly into an exterior material; a process of forming a sealing part by overlapping and bonding two sealing surfaces of the exterior material; a process of sealing the exterior material in which the electrode assembly is inserted through the sealing part; and a process of forming a reinforcing structure on an outer surface of the exterior material.

## EFFECTS OF THE INVENTION

According to the present disclosure, a battery includes an electrode assembly including a plurality of electrodes, and an exterior material including an accommodating part which accommodates the electrode assembly and a sealing part which seals the electrode assembly along the accommodating part, and also includes a reinforcing structure on an outer surface of the exterior material. Therefore, when the battery is bent, it is possible to suppress the occurrence of a large gap caused by interlayer separation between electrodes inside the exterior material.

Further, when the battery is bent or deformed, the reinforcing structure configured to maintain the shapes of the sealing part of the exterior material and the adjacent area can effectively suppress damage to the exterior material that may occur as the battery is deformed with a uniform curvature below a threshold value.

Furthermore, when an external force capable of bending or deforming the battery beyond a reference range or above a threshold value is applied to the battery, the reinforcing structure can suppress deformation of the battery beyond the threshold value.

Moreover, the performance and safety of the battery can be improved by minimizing penetration of external moisture through the sealing part in a high-humidity environment.

## BRIEF DESCRIPTION OF THE DRAWINGS

FIG. 1 is a diagram illustrating a battery according to a first embodiment of the present disclosure.
FIG. 2 is a diagram illustrating the battery including a reinforcing structure formed on an outer surface of a sealing part shown in **FIG. 1.**
FIG. 3 is a diagram illustrating a battery according to a second embodiment of the present disclosure.
FIG. 4 is a diagram illustrating the battery including a reinforcing structure extending from a sealing part and covering an adjacent area of an exterior material shown in **FIG. 3.**
FIG. 5 is a diagram illustrating a shape of a reinforcing structure according to an embodiment of the present disclosure.
FIG. 6 is a diagram illustrating a reinforcing structure formed on an outer surface of a sealing part according to an embodiment of the present disclosure.
FIG. 7 is a diagram illustrating a comparative evaluation between a flexible battery in which no reinforcing structure is formed on a sealing part and a flexible battery in which a reinforcing structure is formed on a sealing part according to an embodiment of the present disclosure.
FIG. 8 is a flowchart showing a method for manufacturing a battery according to an embodiment of the present disclosure.
FIG. 9 is a diagram illustrating a process of forming a reinforcing structure on a sealing part according to the present disclosure.

## MODE FOR CARRYING OUT THE INVENTION

Hereinafter, embodiments will be described in detail with reference to the accompanying drawings so that the present disclosure may be readily implemented by a person with ordinary skill in the art. However, it is to be noted that the present disclosure is not limited to the embodiments but can be embodied in various other ways. In the drawings, parts irrelevant to the description are omitted for the simplicity of explanation, and like reference numerals denote like parts throughout the whole document.

Further, throughout the whole document, the term "comprises or includes" and/or "comprising or including" used in the document means that one or more other components, steps, operation and/or existence or addition of elements are not excluded in addition to the described components, steps, operation and/or elements unless context dictates otherwise. Also, throughout the whole document, the term "connected to" may be used to designate a connection or coupling of one element to another element and includes both an element being directly connected to another element, an element being connected to another element via another element, and an element being electronically connected to another element via another element. Throughout the whole document, the term "on" that is used to designate a position of one element with respect to another element includes both a case that the one element is adjacent to the other element and a case that any other element exists between these two elements.

A battery, i.e., an electrochemical cell, according to the present disclosure may be a lithium-ion battery. Specifically, the electrochemical cell according to the present disclosure may be configured such that an electrode assembly is accommodated and sealed with an electrolyte within an exterior material, and charged and discharged by movement of lithium ions. The electrochemical cell according to the present disclosure may be configured to be bent with flexibility while maintaining its function. Hereinafter, embodiments of the present disclosure will be described in detail with reference to the accompanying drawings.

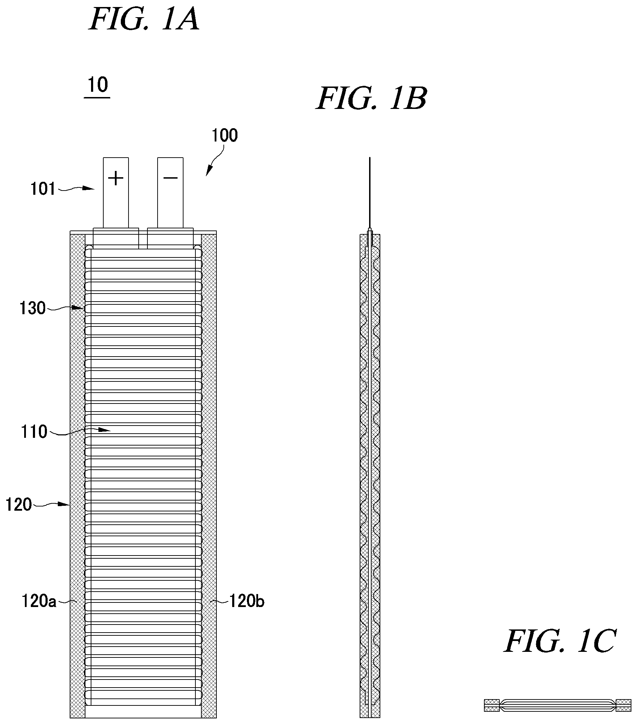

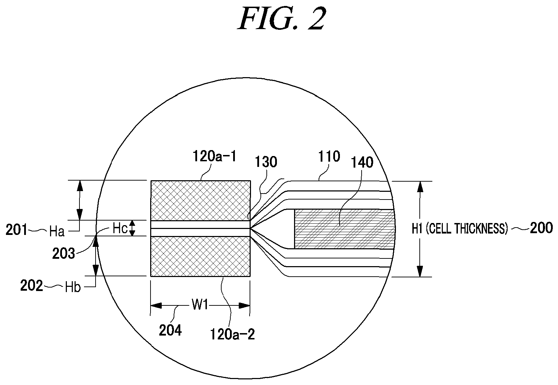

**FIG. 1** is a diagram illustrating a battery according to a first embodiment of the present disclosure, and **FIG. 2** is a diagram illustrating the battery including a reinforcing structure formed on an outer surface of a sealing part shown in **FIG. 1.** According to the first embodiment, a battery 10 includes reinforcing structures 120a and 120b for an exterior material 100 on an outer surface of a sealing part 120.

**FIG. 1A** is a front view of the battery 10, **FIG. 1B** is a side view of the battery 10, and **FIG. 1C** is a plan view of the battery 10. The battery 10 according to the first embodiment of the present disclosure may include the exterior material 100, an electrode assembly and an electrode lead 101. The electrode assembly includes a plurality of electrodes and may further include an active material and a separator, and may have a structure in which they are stacked in a thickness direction.

The electrodes may include first and second electrode plates having different polarities, and an active material may be coated on both surfaces or one surface of each of the first and second electrode plates. A separator may be interposed between the first electrode plate and the second electrode plate. For example, in the first electrode plate, a current collector used as a negative electrode is made of copper, aluminum, stainless steel, etc., and a negative electrode active material includes one or a combination of carbon, lithium, silicon, silicon derivatives, such as $SiO_x$, silicon-graphite composite, tin and silicon-tin composite. Also, in the second electrode plate, a current collector used as a positive electrode is made of aluminum, stainless steel, etc., and a positive electrode active material includes one or a combination of lithium cobalt oxide, lithium nickel oxide, lithium manganese oxide, lithium cobalt-manganese oxide, lithium cobalt-nickel oxide, lithium manganese-nickel oxide, lithium cobalt-nickel-manganese oxide, lithium cobalt-nickel-aluminum oxide and lithium iron phosphate. The electrode assembly may have a shape in which the first and second electrode plates extend, among two directions in which surfaces are formed, longer in a longitudinal direction than in a width direction, and have a small thickness in the thickness direction in which the active materials and the separator are stacked and which intersects with (for example, being orthogonal to) the surface-forming direction.

Further, the electrode assembly may include electrode connection tabs and lead connection tabs. The electrode connection tabs may be formed to protrude from one ends of the first and second electrode plates in the longitudinal direction, and the electrode connection tabs protruding from electrodes having the same polarity may be coupled to each other. The electrodes may be electrically connected in parallel by the electrode connection tabs. The lead connection tabs are connected to the electrode lead 101, and may protrude from the electrode plates of the negative electrode and the positive electrode so as to be coupled to the electrode lead 101.

The exterior material 100 according to the first embodiment of the present disclosure includes an accommodating part 110 configured to accommodate the electrode assembly. The accommodating part 110 may form a space for accommodating the electrode assembly, and the sealing part 120 may be bonded to seal the accommodated electrode assembly from the outside. In order to form the accommodating part 110 on the exterior material, the sealing part 120 of the exterior material 100 may be processed to be pressed in the thickness direction so that a predetermined area of the exterior material 100 has a substantially rectangular bowl (or cup) shape.

The exterior material 100 may be formed as a film having a stacked structure including, for example, polypropylene (PP), metal and nylon layers. In addition to nylon, combinations with other materials, such as polyethylene terephthalate (PET), polyvinyl chloride (PVC), polycarbonate (PC), polyethylene (PE), and polyimide (PI), are also possible.

The exterior material 100 includes a concavo-convex pattern including at least one concave portion and at least one convex portion. The at least one concave portion and the at least one convex portion include an adjacent area 130 that forms a boundary line in contact with the sealing part 120 at an end portion in one direction corresponding to a width of the battery 10.

The adjacent area 130 may include a boundary line between the concavo-convex pattern and the sealing part 120. That is, as shown in **FIG. 1,** the adjacent area 130 may include two points of each concavo-convex pattern that are in contact with the sealing part 120 and a boundary line extending between the two points. The boundary line of the adjacent area 130 may extend in a substantially straight line along the sealing part 120 having a flat plate shape, and may be connected to the boundary line of the adjacent area 130 of a neighboring concavo-convex pattern so as to extend as a single line.

For example, the concavo-convex pattern extends in one direction and is repeatedly disposed in a direction intersecting with the one direction. Specifically, the concavo-convex pattern may be protruded and recessed alternately in the thickness direction (i.e., protruded alternately in opposite directions) so as to have a concavo-convex shape along the one direction. Herein, the one direction may be the above-described width direction, and the direction in which the concavo-convex pattern is repeated may be the longitudinal direction. Due to the protruded and recessed concavo-convex pattern, the exterior material 100 forming the accommodating part 110 may have a wave or crease pattern in the longitudinal direction.

The exterior material 100 includes the sealing part 120 that seals the electrode assembly along the accommodating part 110. The sealing part 120 seals the electrode assembly by bonding sealing surfaces along edges of the accommodating part 110. For example, the sealing surfaces refer to the surfaces of the exterior material 100. The two sealing surfaces overlapping along the edges of the accommodating part 110 are bonded to each other so that an inner space (the accommodating part 110) can be isolated from the outside. Herein, the electrode assembly and an electrolyte described above may be accommodated in the inner space, and they may be kept in a sealed state.

The reinforcing structures 120a and 120b for the exterior material 100 may be formed on an outer surface of the sealing part 120 according to the first embodiment of the present disclosure. Herein, the reinforcing structures 120a and 120b may be formed on both surfaces of the sealing part 120. For example, the first reinforcing structure 120a may be formed on a first sealing part located at one end of the exterior material 100, and the second reinforcing structure 120b may be formed on a second sealing part located at the other end of the exterior material 100.

In this case, the reinforcing structures 120a and 120b may be selectively formed on the entire area or a partial area of a cross-sectional area corresponding to one surface of the sealing part 120.

Although not illustrated in the drawings, the reinforcing structures 120a and 120b may extend to cover an edge area of the exterior material 100. Herein, the edge area of the exterior material 100 may refer to an edge region of the sealing part 120 included in the exterior material 100, *i.e.,* the outermost edge region of the exterior material 100.

For example, the edge area may refer to an edge region of the exterior material 100 positioned in a direction parallel to a long axis direction of the battery 10.

As described above, the reinforcing structures 120a and 120b extend to cover the edge area of the exterior material 100. Accordingly, structural stability of the exterior material 100 against physical deformation of the battery 10 can be improved, and penetration of external moisture through the sealing part 120 can be effectively suppressed.

Hereinafter, the reinforcing structures 120a and 120b included in the exterior material 100 according to the first embodiment will be described with reference to **FIG. 2.**

**FIG. 2** illustrates a cross-sectional view of the battery 10 in which the reinforcing structures 120a and 120b are formed on the outer surface of the sealing part 120. Herein, H1 denotes a thickness 200 of the battery 10, W1 denotes a width 204 of the sealing part 120, Ha and Hb denote a thickness 201 of a reinforcing structure 120a-1 formed on a first surface (front surface) of the first sealing part and a thickness 202 of a reinforcing structure 120a-2 formed on a second surface (back surface) of the first sealing part, respectively, and Hc denotes a thickness 203 of the sealing part 120.

Thicknesses of the reinforcing structures 120a and 120b formed on the both surfaces of the sealing part 120 are designed based on a thickness of the battery 10 and a thickness of the sealing part 120. The thicknesses of the reinforcing structures 120a and 120b formed on the respective surfaces of the sealing part 120 may each be designed according to Equation 1 below.

$$[\text{Equation 1}]$$

$$H1 > Ha + Hb$$

Referring to Equation 1, a sum of the thickness 201 of the reinforcing structure 120a-1 formed on the first surface (front surface) of the first sealing part and the thickness 202 of the reinforcing structure 120a-2 formed on the second surface (back surface) of the first sealing part may be designed to be smaller than a thickness H1 of the battery 10.

This is because, when the sum of the thickness 201 of the reinforcing structure 120a-1 formed on the first surface (front surface) of the first sealing part and the thickness 202 of the reinforcing structure 120a-2 formed on the second surface (back surface) of the first sealing part is designed to be greater than the thickness 200 of the battery 10, a volume of the battery 10 may increase, thereby reducing energy density, and rigidity of the reinforcing structures 120a and 120b may increase, resulting in a decrease in flexibility.

The thicknesses of the reinforcing structures 120a and 120b formed on the respective surfaces of the sealing part 120 may each be designed according to Equation 2 below.

[Equation 2]

$$0.5 \text{ mm} \leq Ha \text{ (or } Hb) \leq 1/2(H1 - Hc)$$

Referring to Equation 2, the thickness 201 of the reinforcing structure 120a-1 formed on the first surface (front surface) of the first sealing part and the thickness 202 of the reinforcing structure 120a-2 formed on the second surface (back surface) of the first sealing part may each be designed to be 0.5 mm or greater and to be equal to or less than one half of a value obtained by subtracting the thickness 203 of the sealing part 120 from the thickness 200 of the battery 10.

This is because, when the thickness 201 of the reinforcing structure 120a-1 formed on the first surface (front surface) of the first sealing part and the thickness 202 of the reinforcing structure 120a-2 formed on the second surface (back surface) of the first sealing part are designed to be too small, the reinforcing structures 120a-1 and 120a-2 cannot properly perform their reinforcing function.

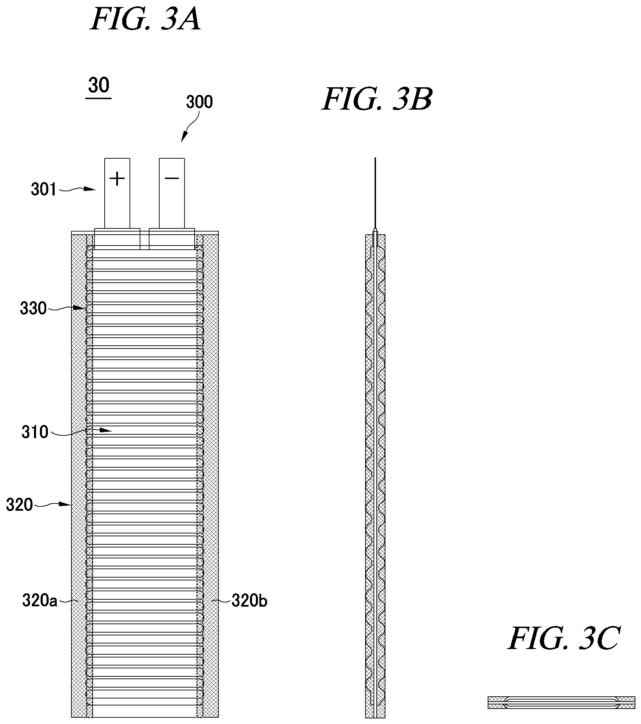

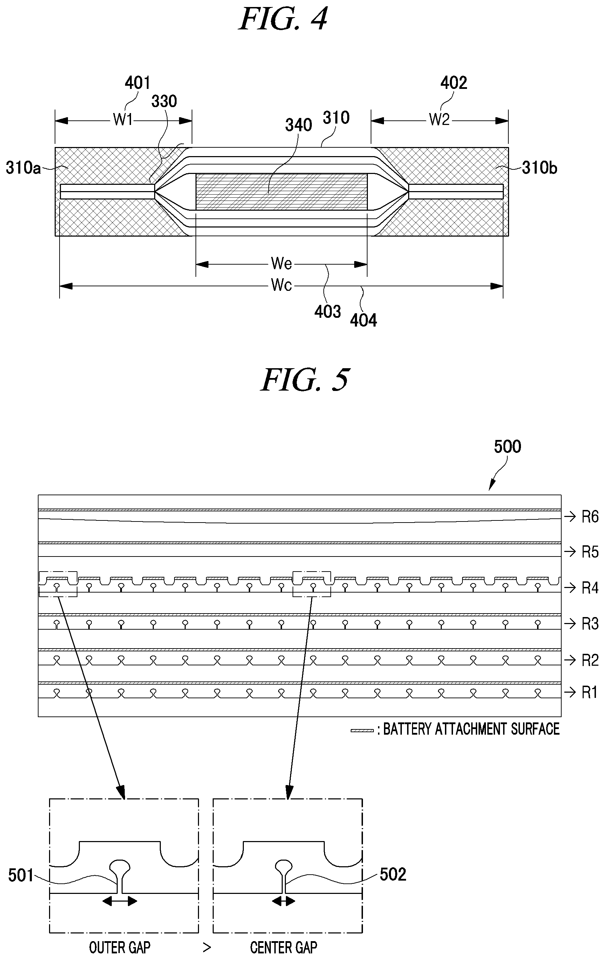

**FIG. 3** is a diagram illustrating a battery according to a second embodiment of the present disclosure, and **FIG. 4** is a diagram illustrating the battery including a reinforcing structure extending from a sealing part and covering an adjacent area of an exterior material shown in **FIG. 3.** According to the second embodiment, a battery 30 includes reinforcing structures 320a and 320b for an exterior material 300 on an outer surface of a sealing part 320, and the reinforcing structures 320a and 320b extend from the sealing part 320 to cover an adjacent area 330 of the exterior material 300.

**FIG. 3A** is a front view of the battery 30, **FIG. 3B** is a side view of the battery 30, and **FIG. 3C** is a plan view of the battery 30. The battery 30 according to the second embodiment of the present disclosure may include the exterior material 300, an electrode assembly and an electrode lead 301. The electrode assembly includes a plurality of electrodes and may further include an active material and a separator, and may have a structure in which they are stacked in a thickness direction.

Herein, the electrodes included in the electrode assembly are the same as described above, and detailed descriptions thereof will be omitted.

Further, the electrode assembly may include electrode connection tabs and lead connection tabs. The electrode connection tabs may be formed to protrude from one ends of the first and second electrode plates in the longitudinal direction, and the electrode connection tabs protruding from electrodes having the same polarity may be coupled to each other. The electrodes may be electrically connected in parallel by the electrode connection tabs. The lead connection tabs are connected to the electrode lead 301, and may protrude from the electrode plates of the negative electrode and the positive electrode so as to be coupled to the electrode lead 301.

The exterior material 300 according to the second embodiment of the present disclosure includes an accommodating part 310 configured to accommodate the electrode assembly. The accommodating part 310 may form a space for accommodating the electrode assembly, and the sealing part 320 may be bonded to seal the accommodated electrode assembly from the outside. In order to form the accommodating part 310 on the exterior material, the sealing part 320 of the exterior material 300 may be processed to be pressed in the thickness direction so that a predetermined area of the exterior material 300 has a substantially rectangular bowl (or cup) shape.

The exterior material 300 may be formed as a film having a stacked structure including, for example, polypropylene (PP), metal and nylon layers. In addition to nylon, combinations with other materials, such as polyethylene terephthalate (PET), polyvinyl chloride (PVC), polycarbonate (PC), polyethylene (PE), and polyimide (PI), are also possible.

The exterior material 300 includes a concavo-convex pattern including at least one concave portion and at least one convex portion. The at least one concave portion and the at least one convex portion include the adjacent area 330 that forms a boundary line in contact with the sealing part 320 at an end portion in one direction corresponding to a width of the battery 30.

The adjacent area 330 may include a boundary line between the concavo-convex pattern and the sealing part 320. That is, as shown in **FIG. 3,** the adjacent area 330 may include two points of each concavo-convex pattern that are in contact with the sealing part 320 and a boundary line extending between the two points. The boundary line of the adjacent area 330 may extend in a substantially straight line along the sealing part 320 having a flat plate shape, and may be connected to the boundary line of the adjacent area 330 of a neighboring concavo-convex pattern so as to extend as a single line.

For example, the concavo-convex pattern extends in one direction and is repeatedly disposed in a direction intersecting with the one direction. Specifically, the concavo-convex pattern may be protruded and recessed alternately in the thickness direction (i.e., protruded alternately in opposite directions) so as to have a concavo-convex shape along the one direction. Herein, the one direction may be the above-described width direction, and the direction in which the concavo-convex pattern is repeated may be the longitudinal direction. Due to the protruded and recessed concavo-convex pattern, the exterior material 300 forming the accommodating part 310 may have a wave or crease pattern in the longitudinal direction.

The exterior material 300 includes the sealing part 320 that seals the electrode assembly along the accommodating part 310. For example, the sealing surfaces refer to the surfaces of the exterior material 300. The two sealing surfaces overlapping along edges of the accommodating part 310 are bonded to each other so that an inner space (the accommodating part 310) can be isolated from the outside. Herein, the electrode assembly and an electrolyte described above may be accommodated in the inner space, and they may be kept in a sealed state.

The reinforcing structures 320a and 320b according to the second embodiment of the present disclosure may extend from the sealing part 320 to cover the adjacent area 330 of the exterior material 300. Herein, the reinforcing structures 320a and 320b may be formed to cover both surfaces of the sealing part 320. For example, the first reinforcing structure 320a may be formed on a first sealing part located at one end of the exterior material 300, and the second reinforcing structure 320b may be formed on a second sealing part located at the other end of the exterior material 300.

For example, the first reinforcing structure 320a, which extends from the sealing part 320 to cover a region including the adjacent area 330, may be formed to contain the same type of material or different types of materials.

As a more specific example, a reinforcing structure A containing a first material may be formed on the sealing part 320, and a reinforcing structure B containing the first material or a second material different from the first material may be continuously formed in a region including the adjacent area 330, thereby constituting the first reinforcing structure 320a.

The first material and the second material will be described in more detail below in the section regarding the shape of the reinforcing structure.

Further, the reinforcing structures 320a and 320b may extend to cover an edge area of the exterior material 300.

Hereinafter, the reinforcing structures 320a and 320b for the exterior material 300 according to the second embodiment will be described with reference to **FIG. 4.**

**FIG. 4** illustrates a cross-sectional view of the battery 30 in which the reinforcing structures 320a and 320b extend from the sealing part 320 to cover the adjacent area 330 of the exterior material 300. Herein, Wc denotes a width 404 of the battery 30, We denotes a width 403 of an electrode assembly 340, W1 denotes a width 401 of the first reinforcing structure 320a, and W2 denotes a width 402 of the second reinforcing structure 320b.

In this case, as illustrated in **FIG.** 4, the reinforcing structures 320a and 320b may extend to cover an edge area of the exterior material 300. That is, the reinforcing structures 320a and 320b may be positioned to completely surround an outermost portion of the sealing part 320 located in a direction opposite to the adjacent area 330.

Widths of the reinforcing structures 320a and 320b formed on the both surfaces of the sealing part 320 are designed based on a width of the battery 30 and a width of the electrode assembly 340. The widths of the reinforcing structures 320a and 320b formed on the respective surfaces of the sealing part 320 may each be designed according to Equation 3 below.

[Equation 3]

$$|(Wc - We) - (W1 + W2)| \leq 5 \text{ mm}$$

Referring to Equation 3, an absolute value of a difference between a sum of the width 401 of the first reinforcing structure 320a and the width 402 of the second reinforcing structure 320b and a value obtained by subtracting the width 403 of the electrode assembly 340 from the width 404 of the battery 30 may be 5 mm or less.

This is because, when the value obtained by subtracting the width 403 of the electrode assembly 340 from the width 404 of the battery 30 is greater by 5 mm or more than the sum of the width 401 of the first reinforcing structure 320a and the width 402 of the second reinforcing structure 320b, a step difference occurs between the electrode assembly 340 and the reinforcing structures 320a and 320b, thereby causing degradation in durability.

Alternatively, when the value obtained by subtracting the width 403 of the electrode assembly 340 from the width 404 of the battery 30 is smaller by 5 mm or more than the sum of the width 401 of the first reinforcing structure 320a and the width 402 of the second reinforcing structure 320b, a volume of the battery 30 increases, thereby reducing energy density.

In an embodiment, an absolute value of the difference between the width 401 of the first reinforcing structure 320a and the width 402 of the second reinforcing structure 320b and the value obtained by subtracting the width 403 of the electrode assembly 340 from the width 404 of the battery 30 may be 5 mm or less, 4 mm or less, 3 mm or less, 2 mm or less, or 1 mm or less. Preferably, it may be 0.5 mm or less.

In a preferable embodiment, when the difference between the value obtained by subtracting the width 403 of the electrode assembly 340 from the width 404 of the battery 30 and the sum of the width 401 of the first reinforcing structure 320a and the width 402 of the second reinforcing structure 320b is 1 mm or less, 0.5 mm or less, or 0 mm, the occurrence of a large gap can be effectively suppressed. In particular, the effect may be greatest when the difference is 0 mm.

In the exterior material 100 according to the first embodiment and the exterior material 300 according to the second embodiment, the sealing part 120 or 320 may have a flat plate shape extending in the width direction or the longitudinal direction. For example, the flat plate shape of the sealing part 120 or 320 may not be bent so that its surfaces do not face each other. Alternatively, the sealing part 120 or 320 may have a pattern different from the concavo-convex pattern. For example, the sealing part 120 or 320 may have a pattern having a lower height in the thickness direction of the exterior material 100 or 300 than the concavo-convex pattern.

The exterior material 100 or 300 according to an embodiment of the present disclosure is formed such that the concavo-convex pattern of the accommodating part 110 or 310 is in close contact with the sealing part 120 or 320. Accordingly, a space between the concavo-convex pattern and the sealing part 120 or 320 in which stress can be concentrated is not formed in the present embodiment. By removing the structurally weak part, it is possible to greatly reduce the possibility of damaging an end portion in one direction of the concavo-convex pattern or the sealing part 120 or 320 in a usage environment where repeated bending occurs. Accordingly, the battery 10 or 30 as an electrochemical cell and the exterior material 100 or 300 according to the present disclosure can be improved in durability, and can be improved in safety due to a lower likelihood of damage and leakage.

Meanwhile, the electrode lead 101 or 301 is connected to the electrode assembly inside the exterior material 100 or 300 and extended to be exposed to the outside of the exterior material 100 or 300. The electrode lead 101 or 301 functions as a terminal for electrical connection with the electrode assembly accommodated in the exterior material 100 or 300, and when the sealing part 120 or 320 is formed, the electrode lead 101 or 301 may be bonded as being interposed between the sealing surfaces so as to penetrate the sealing part 120 or 320. A pair of electrode leads 101 or 301 of the positive electrode and the negative electrode may be coupled to the respective poles of the lead connection tabs provided in the electrode assembly.

Although not illustrated in FIG. 1 to FIG. 4, a recess portion recessed at a part of the convex portion may be formed in the convex portion in order to effectively suppress the formation of irregular electrode layer gaps and large gaps when the battery 10 or 30 is bent. For example, the convex portion may include a recess portion recessed in a dot shape at a central area of the convex portion. Herein, at least two recess portions may formed on each of at least one convex portion in one direction corresponding to the width of the battery. The recess portion may have the above-described dot shape, and may further have one or more shapes selected from a prismatic shape, a cylindrical shape, and modified shapes thereof.

For example, a gap between at least two recess portions formed on a first convex portion among at least one convex portion may be designed to be equal to a gap between at least two recess portions formed on a second convex portion located next to the first convex portion.

As another example, a gap between at least two recess portions formed on a first convex portion among at least one convex portion may be designed to be different from a gap between at least two recess portions formed on a second convex portion located next to the first convex portion.

FIG. 5 is a diagram illustrating a shape of a reinforcing structure according to an embodiment of the present disclosure. Referring to FIG. 5, the reinforcing structures 120a and 120b or 320a and 320b formed on the outer surface of the sealing part 120 or 320 of the exterior material 100 according to the first embodiment or the exterior material 300 according to the second embodiment may be formed into various shapes 500. Herein, an upper surface of the reinforcing structure indicated by diagonal shading may be an attachment surface by which the reinforcing structures 120a and 120b or 320a and 320b are attached to the sealing part 120 or 320.

As described above, the reason for implementing the reinforcing structures 120a and 120b or 320a and 320b in various shapes 500 is to suppress over-bending or over-folding of the battery 10 or 30 with a small radius of curvature due to adjacent reinforcing structures coming into close contact with each other when the battery 10 or 30 is bent.

For example, a reinforcing structure R1 may be attached to the sealing part 120 or 320 of the exterior material 100 or 300. Herein, the reinforcing structure R1 may be designed as a concavo-convex structure in which a plurality of block-shaped unit structures is integrally formed while being spaced apart from one another so that a designed bending radius is reflected. In this case, the bending radius may be controlled by adjusting a separation distance between the block-shaped unit structures included in the reinforcing structure, and the separation distance may be designed to be uniform.

As another example, a reinforcing structure R2 may include unit structures arranged at progressive intervals to reduce asymmetric pressure concentrated in a central area of the sealing part 120 or 320 of the exterior material 100 or 300. Herein, the reinforcing structure R2 may be configured in a block shape reflecting the bending radius, and the progressive interval may mean that a gap between adjacent unit structures increases from the central area toward peripheral areas. For example, the reinforcing structure R2 may be configured such that a gap 501 in a peripheral area is larger than a gap 502 in the central area.

As yet another example, a reinforcing structure R3 may include unit structures arranged at progressive intervals on the sealing part 120 or 320 of the exterior material 100 or 300 similarly to the above-described reinforcing structure R2. Herein, the reinforcing structure R3 may be configured in a linear block shape in which one end of each unit structure is flat, in order to reduce the bending radius.

As still another example, a reinforcing structure R4 may be configured in a block shape including a lower hole structure added to the reinforcing structure R3, in order to minimize an attachment surface of the sealing part 120 or 320 of the exterior material 100 or 300.

As still another example, a reinforcing structure R5 may be configured in an integrated flat shape and formed on the sealing part 120 or 320 of the exterior material 100 or 300. In this case, when the reinforcing structure is configured in a flat shape, a bending radius may be determined by adjusting a material type and/or a hardness of a material contained in the reinforcing structure.

As still another example, a reinforcing structure R6 may be configured in a non-corrugated tapered shape in which the thickness increases toward the central area to reinforce the central area, and may be formed on the sealing part 120 or 320 of the exterior material 100 or 300.

The reinforcing structures described above may contain one or more selected from metals and polymers.

For example, any metal that has no thermal or electrical impact on the battery may be used. As non-limiting examples, the metal may include stainless steel or an alloy including the same, but is not limited thereto.

Further, the polymer may be one or more selected from polymer resins including elastomers or acrylates.

For example, the elastomer may have a Young's modulus of 0.05 GPa or less. Examples of the elastomer may include butyl rubber, ethylene-vinyl acetate copolymer (EVA), isoprene (IR), natural rubber (NR), neoprene (CR), polyurethane elastomers, and silicone elastomers, but are not limited thereto. When the Young's modulus of the elastomer satisfies the above-described range, it is possible to secure flexibility of the battery while effectively suppressing damage to the exterior material.

The acrylate included in the polymer resin may be one or more selected from epoxy acrylate, urethane acrylate, polyester acrylate, silicone acrylate, and alkyl acrylate, but is not limited thereto.

In a preferable embodiment, the elastomer and the polymer resin may each have a Shore hardness of D40 or more. Specifically, the Shore hardness of the elastomer and the polymer resin contained in the reinforcing structure may be in a range of D40 to D100, D40 to D90, or D40 to D80.

When the Shore hardness of the elastomer and the polymer resin contained in the reinforcing structure satisfies the above-described range, deformation of the exterior material caused by deformation of the battery can be suppressed. Therefore, it is possible to improve structural stability of the exterior material.

As described above, in the second embodiment including the reinforcing structures 320a and 320b that extend from the sealing part 320 to cover an area including an adjacent area, the reinforcing structure A containing a first material may be formed on the sealing part 320, and the reinforcing structure B containing the first material or a second material different from the first material may be continuously formed in the area 330 including the adjacent area. Herein, the first material and the second material may be one or more selected from the materials described above.

For example, the reinforcing structures 320a and 320b of the second embodiment may independently contain first and second materials that are different from each other.

As a specific example, the reinforcing structure A containing one or more materials selected from a metal, an elastomer, and a polymer resin may be formed on the sealing part 320. The reinforcing structure B containing a material having a lower Shore hardness than the material contained in the reinforcing structure A may be formed in the area 330 including the adjacent area. For example, the reinforcing structure A may contain a first polymer resin selected from the above-described polymer resins, and the reinforcing structure B may contain a second polymer resin having a lower Shore hardness than that of the first polymer resin.

As each of the reinforcing structure A and the reinforcing structure B contains different materials based on Shore hardness, it is possible to effectively suppress collapse of a structural shape of the area 330 including the adjacent area while suppressing damage to the exterior material.

Further, the reinforcing structures 120a and 120b of the first embodiment may contain the same materials as the reinforcing structure A. Thus, a detailed description thereof will be omitted.

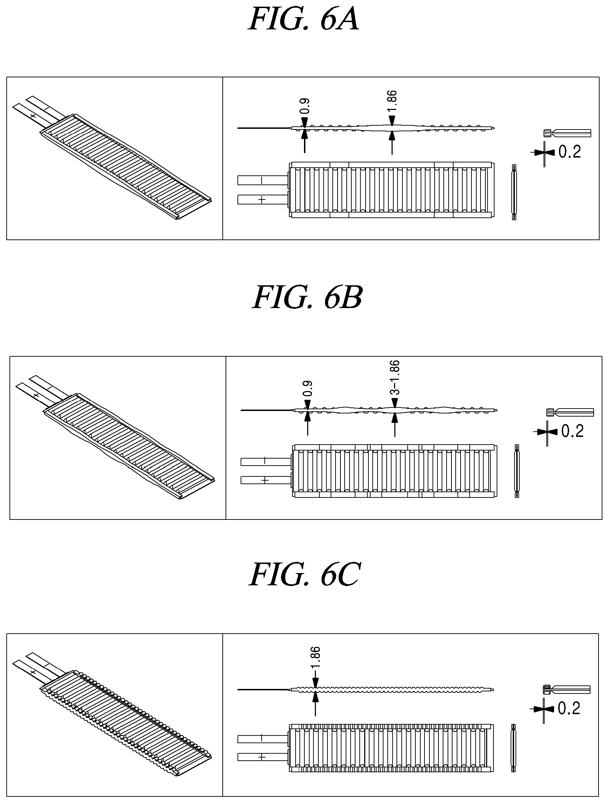

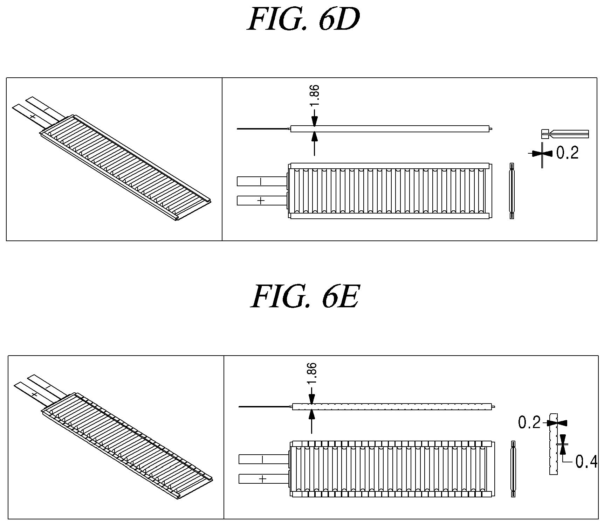

FIG. 6 is a diagram illustrating a reinforcing structure formed on an outer surface of a sealing part according to an embodiment of the present disclosure. Referring to FIG. 6A, a thickness of a reinforcing structure in a central area of the battery 10 may be increased to reinforce the central area. For example, a thickness of the reinforcing structures 120a and 120b or 320a and 320b in the central area of the sealing part 120 or 320 may be 1.86 mm, a thickness of the reinforcing structures 120a and 120b or 320a and 320b in the peripheral area may be 0.9 mm, and one end of the reinforcing structure may protrude by 0.2 mm with respect to the outermost portion of the sealing part. That is, the reinforcing structure may extend from the sealing part to cover an edge area of the exterior material.

Accordingly, by increasing the thickness of the reinforcing structures 120a and 120b or 320a and 320b in the central area of the sealing part 120 or 320, a supporting force can be secured during bending of the exterior material 100 or 300.

Referring to FIG. 6B, thicknesses of reinforcing structures 120a and 120b or 320a and 320b located at the 1/4, 1/2, and 3/4 positions on the sealing part of the exterior material 100 or 300 may be increased. For example, a thickness of the reinforcing structures 120a and 120b or 320a and 320b in the central area of the sealing part 120 or 320 may be 1.86 mm, and a thickness in the peripheral area may be 0.9 mm, while the reinforcing structures at the 1/4, 1/2, and 3/4 positions of the sealing part 120 or 320 may be configured to have thicknesses ranging from 0.9 mm to 1.86 mm. In this case, one end of the reinforcing structure may protrude by 0.2 mm with respect to the outermost portion of the sealing part.

As described above, by varying the thickness of the reinforcing structures 120a and 120b or 320a and 320b relative to their position on the sealing part 120 or 320, a supporting force can be provided during bending of the battery 10 or 30.

Referring to **FIG. 6C,** a reinforcing structure may be formed on an outer surface of the sealing part 120 or 320 of the exterior material 100. For example, a thickness of the reinforcing structure formed on the outer surface of the sealing part 120 or 320 may be 1.86 mm, and one end of the reinforcing structure may protrude by 0.2 mm with respect to the outermost portion of the sealing part. In this case, as described above, a plurality of block-shaped unit structures may be continuously positioned while being spaced apart from one another at equal intervals.

Referring to **FIG. 6D,** the reinforcing structures 120a and 120b or 320a and 320b having a substantially uniform thickness may be formed on an outer surface of the sealing part 120 or 320 of the exterior material 100 or 300. For example, a thickness of the reinforcing structures 120a and 120b or 320a and 320b formed on the outer surface of the sealing part 120 or 320 may be 1.86 mm, and one end of the reinforcing structure may protrude by 0.2 mm with respect to the outermost portion of the sealing part. In this case, the reinforcing structure may have an integrated flat shape.

Herein, referring to **FIG. 6D,** a supporting force can be secured during bending of the battery 10 or 30 by varying a material type and/or a hardness of a material contained in the reinforcing structures 120a and 120b or 320a and 320b.

Referring to **FIG. 6E,** the reinforcing structures 120a and 120b or 320a and 320b having a substantially uniform thickness may be formed on an outer surface of the sealing part 120 or 320 of the exterior material 100 or 300. For example, a thickness of the reinforcing structures 120a and 120b or 320a and 320b formed on the outer surface of the sealing part 120 or 320 may be 1.86 mm, and a plurality of unit structures may be arranged with a spacing of 0.4 mm and a gap depth of 0.2 mm. Herein, referring to **FIG. 6E,** the reinforcing structure capable of controlling spacing and gap depth may be formed to suppress over-bending beyond a specific radius R.

However, when the reinforcing structures are formed on the exterior material 100 or 300 without consideration of bending radius design, bending the exterior material 100 or 300 with curvatures of R5, R10, and R15 may result in non-uniform curvature even without folding. As a result, the exterior material 100 or 300 may undergo acute bending and be deformed into an elliptical shape with an irregular curvature, thereby causing bending or folding at specific portions of the battery and resulting in accumulation of fatigue at those portions.

However, since the battery of the present disclosure includes the reinforcing structures described above, it can be deformed with a uniform curvature within a designed radius of curvature range even when an external force capable of acute bending is applied.

For example, when the reinforcing structure includes unit structures arranged with a block spacing of 0.27 mm, a block pitch of 1.6 mm, and a block height of 0.8 mm, the battery 10 or 30 including the reinforcing structure to which bending radius design, such as block spacing, pitch, and height, is applied can be uniformly bent even with a small radius of curvature, as adjacent unit structures come into close contact with each other, thereby securing a supporting force.

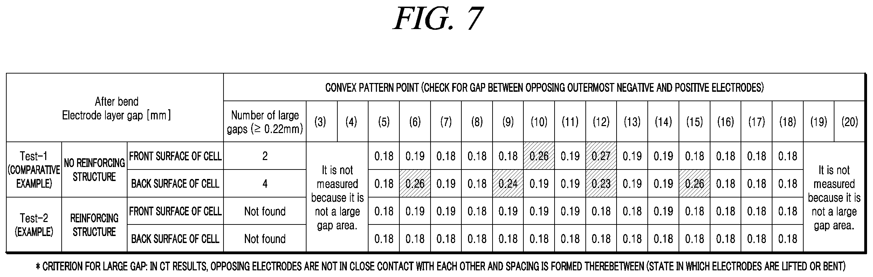

**FIG. 7** is a diagram illustrating a comparative evaluation between a flexible battery in which no reinforcing structure is formed on a sealing part and a flexible battery in which a reinforcing structure is formed on a sealing part according to an embodiment of the present disclosure. Referring to **FIG. 7,** specifically, in order to comparatively evaluate a flexible battery in which no reinforcing structure is formed on a sealing part and a flexible battery in which a reinforcing structure is formed on a sealing part, evaluation methods include: a bending test (R25, 25 rpm, repeated 100 times) to check for cracks or breakage of an exterior material; and a CT scan to examine an internal electrode arrangement and a degree of adhesion.

As a result of evaluating the conventional battery and the battery 10 or 30 of the present disclosure, it was found that in the conventional battery without a reinforcing structure on a sealing part of an exterior material, cracks occurred in the sealing part and an adjacent area, which caused damage to the battery and electrolyte leakage. Also, a large gap occurred between respective electrode layers.

However, the battery 10 or 30 of the present disclosure includes the reinforcing structures 120a and 120b or 320a and 320b on the sealing part 120 or 320. Therefore, the occurrence of a large gap was not observed.

Furthermore, when the battery 10 or 30 including the exterior material 100 or 300 on which the reinforcing structures 120a and 120b or 320a and 320b are formed in the sealing part 120 or 320 according to the present disclosure was repeatedly bent, no cracks were observed in the exterior material 100 or 300 due to the strength of the reinforcing structures 120a and 120b or 320a and 320b and their resistance to bearing loads. Specifically, internal inspection of the battery 10 or 30 according to the present disclosure revealed that a gap between respective electrode layers remained generally uniform during bending of the battery 10 or 30.

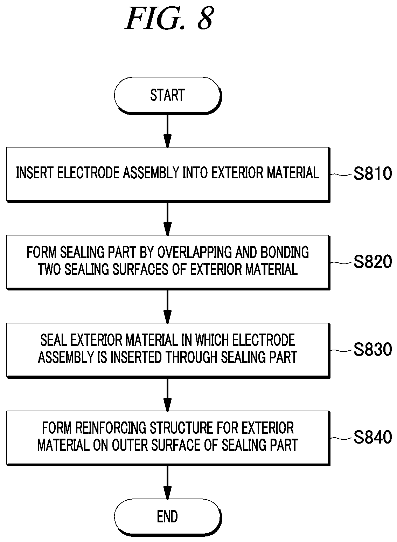

**FIG. 8** is a flowchart showing a method for manufacturing a battery according to an embodiment of the present disclosure. Referring to **FIG.** 8, the battery 10 of the first embodiment and the battery 30 of the second embodiment may undergo the same manufacturing process.

In a process S810, the electrode assembly 140 or 340 may be inserted into the exterior material 100 or 300.

In a process S820, the sealing part 120 or 320 may be formed by overlapping and bonding two sealing surfaces of the exterior material 100 or 300.

In a process S830, the exterior material 100 or 300 in which the electrode assembly 140 or 340 is inserted may be sealed through the sealing part 120 or 320.

In a process S840, the reinforcing structures 120a and 120b for the exterior material 100 or 300 may be formed on an outer surface of the sealing part 120 or 320.

Although not illustrated in **FIG. 8**, the method may further include a process of forming at least one convex portion in one direction on the exterior material 100 or 300. For example, the at least one convex portion may be disposed between two concave portions and may be formed to protrude in a direction opposite to the concave portions.

Although not illustrated in **FIG. 8**, the method may further include a process of forming at least one concave portion adjacent to a convex portion. The concave portion may be formed to protrude toward an inner space of the accommodating part 110 or 310, *i.e.,* the accommodated electrode assembly 140 or 340. Also, the convex portion may be disposed between two concave portions and may be formed to protrude in a direction opposite to the concave portions.

Herein, the process of forming the concave portion may be performed before or after a process of pressing the exterior material on which the convex portion is formed, which will be described later. If the concave portion is formed after pressing the exterior material 100 or 300 on which the convex portion is formed, additional pressing may be performed on the exterior material 100 or 300.

Although not illustrated in **FIG. 8,** the method may further include the process of pressing the exterior material 100 or 300 on which the convex portion is formed.

Although not illustrated in **FIG. 8,** the method may further include a process of forming a recess portion in the convex portion of the pressed exterior material 100 or 300. For example, the recess portion may be formed using a precision pneumatic press that applies pressure with a dot punch. Herein, the precision pneumatic press may be configured as a four-axis set equipped with a punch and a die along with a ball bush. A gap between the punch and the die is physically controlled by a limit block. Thus, it is possible to suppress damage to the exterior material 100 or 200 by adjusting the depth of the recess portion and regulating the press drop velocity.

An outer diameter of the recess portion may be designed to be 30% to 85% of the width of the convex portion. If the outer diameter of the recess portion is less than 30% of the width of the convex portion, it may fail to suppress the formation of irregular electrode layer gaps and large gaps. If the outer diameter of the recess portion exceeds 85%, it may interfere with adjacent concave portions and deform their shape. To this end, if the convex portion has a width W, the outer diameter of the recess portion may be from 0.3 W to 0.85 W, or from 0.35 W to 0.8 W, but is not limited thereto.

In the descriptions above, the processes S810 to S840 may be divided into additional processes or combined into fewer processes depending on an embodiment. In addition, some of the processes may be omitted and the sequence of the processes may be changed if necessary.

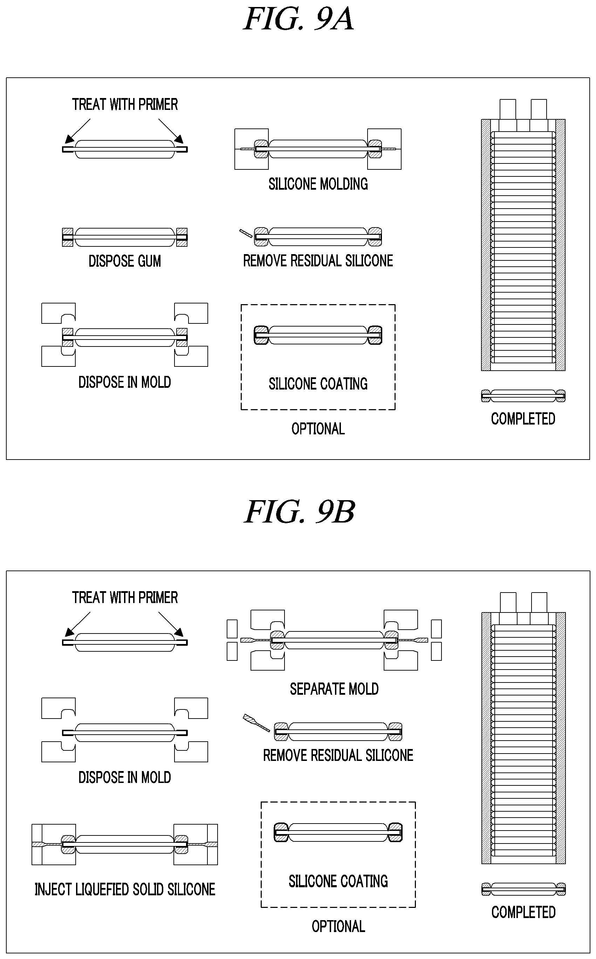

**FIG. 9** is a diagram illustrating a process of forming a reinforcing structure on a sealing part according to the present disclosure. **FIG. 9A** illustrates an insert mold manufacturing process performed using solid silicone to form the reinforcing structures 120a and 120b or 320a and 320b, and **FIG. 9B** illustrates an insert mold manufacturing process performed using liquefied solid silicone obtained by liquefying solid silicone to form the reinforcing structures 120a and 120b or 320a and 320b.

Referring to **FIG. 9A,** after an outer surface of the sealing part 120 or 320 of the exterior material 100 or 300 is treated with a primer, silicone gum (GUM) may be applied thereto.

Then, after the exterior material 100 or 300 with the silicone gum disposed thereon is disposed in a mold, silicone molding may be performed to remove residual silicone and to apply silicone, thereby forming a reinforcing structure on the outer surface of the sealing part 120 or 320 of the exterior material 100 or 300. In this case, the silicone coating process may be omitted.

Referring to **FIG. 9B,** after an outer surface of the sealing part 120 or 320 of the exterior material 100 or 300 is treated with a primer, the exterior material 100 or 300 may be disposed in a mold.

Thereafter, liquefied solid silicone may be injected through an inlet of the mold, followed by separation of the mold. Then, residual silicone may be removed, followed by silicone coating. Thus, a reinforcing structure may be formed on the outer surface of the sealing part 120 or 320 of the exterior material 100 or 300. In this case, the silicone coating process may be omitted.

Further, although not illustrated in the drawings, as described above, a reinforcing structure can be formed on an outer surface of an exterior material using a metal or a polymer contained in the reinforcing structure by a method well known in the art. The effects exhibited by the reinforcing structure formed on the sealing part of the present disclosure are as follows. First, it is possible to minimize damage to the exterior material 100 or 300 while the battery is deformed with a uniform curvature below a threshold value during bending of the battery 10 or 30. Second, it is possible to protect the sealing part 120 or 320 or the adjacent area 130 or 330 of the exterior material 100 or 300 in which damage frequently occurs due to deformation of the battery 10 or 30. Third, it is possible to suppress the occurrence of a large gap generated when electrode layers inside the exterior material 100 or 300 are lifted. Fourth, it is possible to suppress over-bending or over-deformation of the battery 10 or 30 beyond a reference range or above a threshold value with the reinforcing structures 120a and 120b or 320a and 320b. Fifth, it is possible to improve the performance and safety of the stable battery 10 or 30 by minimizing penetration of external moisture through the sealing part 120 or 320 in a high-humidity environment.

The above description of the present disclosure is provided for the purpose of illustration, and it would be understood by a person with ordinary skill in the art that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

## EXPLANATION OF CODES

10, 30: Battery, Electrochemical cell
100, 300: Exterior material
101, 301: Electrode lead
110, 310: Accommodating part
120, 320: Sealing part
130, 330: Adjacent area
120a, 120b, 320a, 320b: Reinforcing structure
140, 340: Electrode assembly

## Claims

1. A battery, comprising:

   an electrode assembly including a plurality of electrodes;
   an exterior material including an accommodating part which accommodates the electrode assembly and a sealing part which seals the electrode assembly along the accommodating part; and
   a reinforcing structure which is formed on at least one surface of the sealing part.

2. The battery of Claim 1,
   wherein the reinforcing structure extends from the sealing part to cover an edge area of the exterior material.

3. The battery of Claim 2,
   wherein the edge area is positioned in a direction parallel to a long axis direction of the battery.

4. The battery of Claim 1,
   wherein a thickness of the reinforcing structure formed on the at least one surface of the sealing part is designed based on a thickness of the battery and a thickness of the sealing part.

5. The battery of Claim 4,

   wherein the thickness of the reinforcing structure is designed to satisfy Relationship 1 below:

   (Equation 1)

   $$0.5 \text{ mm} \leq Ha \leq 1/2(H1\text{-}Hc)$$

   (in Equation 1, Ha denotes a thickness of the reinforcing structure, H1 denotes a thickness of the battery, and Hc denotes a thickness of the sealing part).

6. The battery of Claim 1,
   wherein a first reinforcing structure is formed on a first sealing part located at one end of the exterior material, and a second reinforcing structure is formed on a second sealing part located at the other end of the exterior material.

7. The battery of Claim 6,
   wherein a combined width of the first reinforcing structure and the second reinforcing structure is designed based on a width of the battery and a width of the electrode assembly.

8. The battery of Claim 7,

   wherein the combined width of the first reinforcing structure and the second reinforcing structure is designed to satisfy Equation 2 below:

   (Equation 2)

   $$|(Wc - We) - (W1 + W2)| \leq 5 \text{ mm}$$

   (in Equation 2, Wc denotes a width of the battery, We denotes a width of the electrode assembly, W1 denotes a width of the first reinforcing structure, and W2 denotes a width of the second reinforcing structure).

9. The battery of Claim 1,
   wherein the reinforcing structure includes a plurality of unit structures that are integrally formed while being spaced apart from one another.

10. The battery of Claim 9,
    wherein the unit structures are spaced apart from one another at equal or unequal separation distances.

11. The battery of Claim 10,
    wherein the unit structures are disposed at progressive intervals that increase from a central area of the reinforcing structure toward a peripheral area located at both ends of the reinforcing structure.

12. The battery of Claim 9,
    wherein a central area of the reinforcing structure and peripheral areas located at both ends of the reinforcing structure are formed to have a same thickness or different thicknesses.

13. The battery of Claim 1,
    wherein the reinforcing structure has either an integrated flat structure in which a thickness of a central area of the reinforcing structure and thicknesses of peripheral areas located at both ends of the reinforcing structure are a same, or an integrated tapered structure in which the thickness of the central area is greater than the thicknesses of the peripheral area.

14. The battery of Claim 1,
    wherein the reinforcing structure contains an elastomer or first polymer resin having a Shore hardness of D40 or more.

15. A method for manufacturing a battery, comprising:

    inserting an electrode assembly into an exterior material;
    forming a sealing part by overlapping and bonding two sealing surfaces of the exterior material;
    sealing the exterior material in which the electrode assembly is inserted through the sealing part; and
    forming a reinforcing structure on at least one surface of the sealing part.

*FIG. 1A*

<u>10</u>

*FIG. 1B*

*FIG. 1C*

## FIG. 2

## FIG. 3A

<u>30</u>

300

301

+ −

330

310

320

320a                                    320b

## FIG. 3B

## FIG. 3C

## FIG. 4

## FIG. 5

OUTER GAP     >     CENTER GAP

## FIG. 6A

## FIG. 6B

## FIG. 6C

## FIG. 6D

## FIG. 6E

## FIG. 7

| After bend Electrode layer gap [mm] | | | Number of large gaps (≥ 0.22mm) | CONVEX PATTERN POINT (CHECK FOR GAP BETWEEN OPPOSING OUTERMOST NEGATIVE AND POSITIVE ELECTRODES) | | | | | | | | | | | | | | | | |
|---|---|---|---|---|---|---|---|---|---|---|---|---|---|---|---|---|---|---|---|---|---|
| | | | | (3) | (4) | (5) | (6) | (7) | (8) | (9) | (10) | (11) | (12) | (13) | (14) | (15) | (16) | (17) | (18) | (19) | (20) |
| Test-1 (COMPARATIVE EXAMPLE) | NO REINFORCING STRUCTURE | FRONT SURFACE OF CELL | 2 | It is not measured because it is not a large gap area. | | 0.18 | 0.19 | 0.18 | 0.18 | 0.18 | 0.26 | 0.19 | 0.27 | 0.19 | 0.19 | 0.18 | 0.18 | 0.18 | 0.18 | It is not measured because it is not a large gap area. | |
| | | BACK SURFACE OF CELL | 4 | | | 0.18 | 0.26 | 0.19 | 0.18 | 0.24 | 0.19 | 0.19 | 0.23 | 0.19 | 0.19 | 0.26 | 0.18 | 0.18 | 0.18 | | |
| Test-2 (EXAMPLE) | REINFORCING STRUCTURE | FRONT SURFACE OF CELL | Not found | | | 0.18 | 0.19 | 0.19 | 0.18 | 0.19 | 0.19 | 0.19 | 0.18 | 0.18 | 0.19 | 0.18 | 0.18 | 0.18 | 0.18 | | |
| | | BACK SURFACE OF CELL | Not found | | | 0.18 | 0.18 | 0.18 | 0.18 | 0.18 | 0.18 | 0.18 | 0.18 | 0.18 | 0.18 | 0.18 | 0.18 | 0.18 | 0.18 | | |

* CRITERION FOR LARGE GAP: IN CT RESULTS, OPPOSING ELECTRODES ARE NOT IN CLOSE CONTACT WITH EACH OTHER AND SPACING IS FORMED THEREBETWEEN (STATE IN WHICH ELECTRODES ARE LIFTED OR BENT)

## FIG. 8

```
                    ┌─────────────┐
                    │    START    │
                    └──────┬──────┘
                           │
                           ▼
    ┌──────────────────────────────────────────────┐
    │ INSERT ELECTRODE ASSEMBLY INTO EXTERIOR MATERIAL │ ──S810
    └──────────────────────┬───────────────────────┘
                           │
                           ▼
    ┌──────────────────────────────────────────────┐
    │ FORM SEALING PART BY OVERLAPPING AND BONDING   │ ──S820
    │    TWO SEALING SURFACES OF EXTERIOR MATERIAL   │
    └──────────────────────┬───────────────────────┘
                           │
                           ▼
    ┌──────────────────────────────────────────────┐
    │   SEAL EXTERIOR MATERIAL IN WHICH ELECTRODE    │ ──S830
    │  ASSEMBLY IS INSERTED THROUGH SEALING PART     │
    └──────────────────────┬───────────────────────┘
                           │
                           ▼
    ┌──────────────────────────────────────────────┐
    │   FORM REINFORCING STRUCTURE FOR EXTERIOR      │ ──S840
    │  MATERIAL ON OUTER SURFACE OF SEALING PART     │
    └──────────────────────┬───────────────────────┘
                           │
                           ▼
                    ┌─────────────┐
                    │     END     │
                    └─────────────┘
```

# FIG. 9A

TREAT WITH PRIMER

SILICONE MOLDING

DISPOSE GUM

REMOVE RESIDUAL SILICONE

DISPOSE IN MOLD

SILICONE COATING

OPTIONAL

COMPLETED

# FIG. 9B

TREAT WITH PRIMER

SEPARATE MOLD

DISPOSE IN MOLD

REMOVE RESIDUAL SILICONE

INJECT LIQUEFIED SOLID SILICONE

SILICONE COATING

OPTIONAL

COMPLETED

## INTERNATIONAL SEARCH REPORT

| International application No. |
| --- |
| **PCT/KR2023/016002** |

| | |
| --- | --- |
| **A.** | **CLASSIFICATION OF SUBJECT MATTER** |
| | **H01M 50/184**(2021.01)i; **H01M 10/04**(2006.01)i; **H01M 50/105**(2021.01)i; **H01M 50/247**(2021.01)i |

According to International Patent Classification (IPC) or to both national classification and IPC

| | |
| --- | --- |
| **B.** | **FIELDS SEARCHED** |

Minimum documentation searched (classification system followed by classification symbols)

H01M 50/184(2021.01); H01M 10/04(2006.01); H01M 2/02(2006.01); H01M 50/105(2021.01); H01M 50/131(2021.01); H01M 8/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 조립체(electrode assembly), 수용부(receiving part), 실링부(sealing part), 보강 구조물(reinforcement structure)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | KR 10-2017-0070469 A (LG CHEM, LTD.) 22 June 2017 (2017-06-22)<br>See paragraphs [0025]-[0034], claims 1 and 17 and figures 3-4. | 1-8,13,16 |
| Y | | 14-15 |
| A | | 9-12 |
| Y | KR 10-2032514 B1 (LIBEST) 15 October 2019 (2019-10-15)<br>See paragraph [0062] and claim 3. | 14-15 |
| A | KR 10-2016-0080559 A (LG CHEM, LTD.) 08 July 2016 (2016-07-08)<br>See paragraphs [0028]-[0031] and figures 5a-5b. | 1-16 |
| A | KR 10-2022-0091378 A (LG ENERGY SOLUTION, LTD.) 30 June 2022 (2022-06-30)<br>See paragraphs [0034]-[0059] and claim 1. | 1-16 |

☑ Further documents are listed in the continuation of Box C.    ☑ See patent family annex.

| | |
| --- | --- |
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **17 April 2024** | **17 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/016002** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2017-022001 A (SUMITOMO ELECTRIC IND. LTD.) 26 January 2017 (2017-01-26)<br>See claims 1-3 and figure 1. | 1-16 |

Form PCT/ISA/210 (second sheet) (July 2022)

**INTERNATIONAL SEARCH REPORT**
Information on patent family members

International application No.

**PCT/KR2023/016002**

| Patent document cited in search report | | | Publication date (day/month/year) | Patent family member(s) | | | Publication date (day/month/year) |
|---|---|---|---|---|---|---|---|
| KR | 10-2017-0070469 | A | 22 June 2017 | None | | | |
| KR | 10-2032514 | B1 | 15 October 2019 | KR | 10-2019-0059853 | A | 31 May 2019 |
| KR | 10-2016-0080559 | A | 08 July 2016 | None | | | |
| KR | 10-2022-0091378 | A | 30 June 2022 | None | | | |
| JP | 2017-022001 | A | 26 January 2017 | TW | 201705598 | A | 01 February 2017 |
| | | | | WO | 2017-010150 | A1 | 19 January 2017 |

Form PCT/ISA/210 (patent family annex) (July 2022)